(19) Europäisches Patentamt / European Patent Office / Office européen des brevets

(11) **EP 3 257 736 B1**

(12) **FASCICULE DE BREVET EUROPEEN**

(45) Date de publication et mention de la délivrance du brevet:
**27.07.2022   Bulletin 2022/30**

(21) Numéro de dépôt: **17171415.7**

(22) Date de dépôt: **16.05.2017**

(51) Classification Internationale des Brevets (IPC):
**B62M 6/50** *(2010.01)*

(52) Classification Coopérative des Brevets (CPC):
**B62M 6/50**

(54) **PROCÉDÉ ET UN SYSTÈME D'ESTIMATION D'UN EFFORT UTILE FOURNI PAR UN INDIVIDU PENDANT UNE ACTIVITÉ PHYSIQUE CONSISTANT À EXECUTER UN MOUVEMENT ALTERNATIF DE PÉDALAGE SUR UN DISPOSITIF À PÉDALIER**

SCHÄTZVERFAHREN UND -SYSTEM EINER VON EINER PERSON AUSGEÜBTEN NUTZKRAFT BEI EINER KÖRPERLICHEN AKTIVITÄT, DIE AUS EINER ABWECHSELNDEN TRETBEWEGUNG AUF EINER TRETLAGERVORRICHTUNG BESTEHT

METHOD AND SYSTEM FOR ESTIMATING A USEFUL FORCE EXERTED BY AN INDIVIDUAL DURING PHYSICAL ACTIVITY WHICH CONSISTS OF PERFORMING AN ALTERNATING PEDALLING MOVEMENT ON A PEDAL DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.05.2016   FR 1654366**

(43) Date de publication de la demande:
**20.12.2017   Bulletin 2017/51**

(73) Titulaire: **Commissariat à l'Energie Atomique et aux Energies Alternatives**
**75015 Paris (FR)**

(72) Inventeurs:
• **BRULAIS, Sébastien**
**38400 SAINT-MARTIN D'HERES (FR)**
• **CASSARINO, Leandro**
**38100 GRENOBLE (FR)**
• **GROS, Jean-Philippe**
**38120 LE FONTANIL CORNILLON (FR)**

• **VASSILEV, Andrea**
**38600 FONTAINE (FR)**

(74) Mandataire: **Novaimo**
**Europa 1**
**362, avenue Marie Curie**
**Archamps Technopole**
**74166 Saint-Julien-en-Genevois Cedex (FR)**

(56) Documents cités:
EP-A1- 2 860 096          WO-A1-2012/038677
JP-A- H11 147 494         US-A1- 2007 245 835
US-A1- 2012 247 853       US-A1- 2015 253 210
US-A1- 2016 009 340

• SPAGNOL P ET AL: "Pedaling torque reconstruction for half pedaling sensor", 2013 EUROPEAN CONTROL CONFERENCE (ECC), EUCA, 17 juillet 2013 (2013-07-17), pages 275-280, XP032526741,

## Description

### Domaine technique de l'invention

L'invention concerne un procédé et un système d'estimation de la puissance utile développée par l'individu pendant le pédalage.

### État de la technique

Lors du pédalage, le cycliste exécute avec ses jambes un mouvement alternatif de pédalage sur le vélo, ce qui génère un mouvement alternatif de rotation de deux manivelles, actionnées par les pédales, autour d'un axe.

Afin de mieux gérer son effort, il est utile au cycliste de connaître la puissance utile qu'il fournit pendant le pédalage. Cette information peut également servir à mieux gérer l'assistance au pédalage d'un vélo à assistance électrique équipé d'un moteur électrique ou thermique, à surveiller l'évolution de l'effort du cycliste ou à calculer l'énergie globale fournie par le cycliste..

La puissance utile développée par le cycliste à un instant t peut être calculée par la relation suivante :

$$P_u(t) = F_u(t) \times L_m \times \dot{\theta}(t)$$

où

- $P_u(t)$ représente la puissance utile à l'instant t ;
- $F_u(t)$ représente la force (ou effort) utile ou efficace exercée par le cycliste pour entraîner en rotation le pédalier à l'instant t ;
- $L_m$ représente la longueur des manivelles du pédalier ;
- $\dot{\theta}(t)$ représente la vitesse angulaire du pédalier à l'instant t.

La force utile ou efficace $F_u(t)$ correspond à la composante orthogonale de la force transmise à l'une ou l'autre des manivelles par appui sur les pédales, autrement dit à la force orthogonale à l'axe longitudinal de la manivelle. Cette force est également appelée force tangentielle du fait qu'elle est tangentielle à la trajectoire circulaire de la manivelle.

Une solution connue pour calculer la puissance utile développée par un cycliste est décrite dans le document WO2012/038677. Cette solution est basée sur des mesures de la force d'appui exercée par le cycliste sur l'une des pédales et de la position angulaire de la manivelle actionnée par cette pédale. Un calculateur détermine la force utile ou efficace $F_u(t)$, orthogonale à la manivelle, à partir de la force d'appui mesurée et de la position angulaire mesurée, à l'aide d'un modèle préétabli de répartition de l'effort exercé sur la pédale en fonction de la position angulaire. Un capteur de pression disposé dans ou sur la pédale mesure la force d'appui exercée sur la pédale par le cycliste. La position angulaire est mesurée soit, de façon indirecte, à l'aide d'un accéléromètre placé sur le pédalier ou dans la pédale, soit directement à partir d'un capteur angulaire comportant par exemple une roue codeuse. Ces mesures de position angulaire permettent également de calculer la vitesse angulaire $\dot{\theta}(t)$ du pédalier. Le document JP H11 147494 A décrit un procédé et un système de estimation de puissance selon le préambule des revendications 1 et 6.

Cette solution présente toutefois certains inconvénients. Elle nécessite notamment soit d'utiliser un capteur angulaire coûteux, soit d'estimer la position angulaire à partir de mesures de l'accélération, ce qui requiert d'importantes ressources énergétiques pour le calculateur et peut manquer de précision.

La présente invention vise à améliorer la situation afin d'estimer l'effort utile exercé par un individu lors d'une activité physique consistant à exécuter un mouvement alternatif, de façon plus simple et plus économique.

### Objet de l'invention

La solution de l'invention est atteint par la combinaison des caractéristiques comprises dans la procédure de la revendication 1 et aussi par la combinaison des caractéristiques comprises dans le système de la revendication 6.

A cet effet, l'invention concerne un procédé d'estimation d'un effort utile, notamment d'un effort utile moyen sur un cycle de pédalage, fourni par un individu pendant une activité physique consistant à exécuter un mouvement alternatif de pédalage sur un dispositif à pédalier, comportant une étape de mesure d'une force d'appui sur une pédale du pédalier, distincte de l'effort utile, exercée par l'individu pendant le cycle de pédalage, caractérisé en ce qu'il comprend une étape de détermination d'un maximum de la force d'appui mesurée durant le cycle de pédalage, et une étape d'estimation d'un effort utile moyen exercé par l'individu pendant ledit cycle de pédalage à partir du maximum de la force d'appui déterminé et à l'aide d'une fonction préétablie de corrélation entre un maximum de force d'appui pendant un cycle de pédalage et un effort utile moyen sur ledit cycle.

Grâce à l'invention, l'effort utile, notamment l'effort utile moyen sur le cycle, fourni par l'individu ou cycliste est estimé de façon simple, directement à partir de simples mesures de la force d'appui sur l'une au moins des pédales. L'estimation ne requiert ni mesures d'angle, ni calculs importants.

Selon l'invention, la fonction préétablie est une fonction affine de régression linéaire.

Dans un mode de réalisation particulier, la force d'appui est mesurée à l'aide d'un capteur de pression équipant au moins l'une des pédales du pédalier.

Avantageusement, l'effort utile estimé, notamment l'effort utile moyen sur le cycle, est la composante tangentielle d'une force transmise à la manivelle par appui sur la pédale, notamment l'estimation de la moyenne sur le cycle de la composante tangentielle d'une force transmise aux manivelles par appui sur les pédales.

Avantageusement encore, la force d'appui mesurée est la composante d'une force totale d'appui exercée par l'individu sur la pédale, qui est orthogonale à un plan d'appui sur la pédale.

Dans un mode de réalisation particulier, lors d'une étape préalable de calibration, on détermine la fonction de corrélation à partir d'un ensemble de mesures de ladite force d'appui et de mesures de l'effort utile correspondant, notamment de mesures de l'effort utile moyen sur le cycle correspondant.

L'invention concerne aussi un procédé d'estimation d'une puissance utile, notamment d'une puissance utile moyenne sur un cycle de pédalage, développée par un individu pendant une activité physique consistant à exécuter un mouvement alternatif de pédalage sur un dispositif à pédalier, caractérisé en ce qu'il comprend une estimation de l'effort utile moyen exercé par l'individu pendant le cycle de pédalage courant, par la mise en oeuvre du procédé défini ci-avant, une étape de mesure d'une accélération du pédalier pendant une succession de cycles de pédalage, une étape de détermination d'une cadence de pédalage valide pour le cycle de pédalage courant, à partir des mesures d'accélération, et une étape de calcul de la puissance utile moyenne développée pendant le cycle de pédalage courant, à partir de l'effort utile moyen estimé pour ledit cycle de pédalage courant et de la cadence de pédalage estimée valide pour ledit cycle de pédalage courant.

Avantageusement, lors de l'étape de calcul de la puissance utile, notamment de la puissance utile moyenne développée pendant le cycle de pédalage, on calcule le produit de l'effort utile moyen estimé durant le cycle de pédalage courant, d'une vitesse angulaire courante et de la longueur d'une manivelle du pédalier, ladite vitesse angulaire étant fonction de la cadence de pédalage estimée ($\eth$) valide pour le cycle de pédalage courant.

Avantageusement encore, le procédé d'estimation comprend une étape de test consistant à vérifier si la cadence de pédalage estimée est comprise entre 0,5 Hz et 2 Hz et en ce que le calcul de la puissance utile moyenne pendant le cycle de pédalage est inhibé en cas de test négatif.

Avantageusement encore, le procédé d'estimation comprend une étape de test visant à détecter des variations de l'accélération d'une valeur égale ou proche à +1 g à une valeur égale ou proche à -1 g et d'une valeur égale ou proche à -1 g à une valeur égale ou proche à +1 g, et en ce que le calcul de la puissance utile moyenne pour le cycle de pédalage courant est inhibé en cas de test positif.

Le procédé d'estimation peut également comprendre une étape de test visant à détecter si l'accélération mesurée est contenue dans un gabarit prédéfini et, en cas de test négatif, le calcul de la puissance utile moyenne pour le cycle de pédalage courant est inhibé.

L'invention concerne aussi une utilisation du procédé d'estimation d'une puissance utile, notamment de la puissance utile moyenne développée pendant un cycle de pédalage, développée par un individu pendant une activité physique consistant à exécuter un mouvement alternatif de pédalage sur un dispositif à pédalier, tel qu'il vient d'être défini, pour estimer une quantité de calories dépensées par l'individu pendant l'activité physique, comprenant une étape d'intégration dans le temps de la puissance estimée afin de calculer une estimation de l'énergie dépensée et une étape de conversion en calories de l'énergie dépensée estimée.

L'invention concerne encore un dispositif d'estimation d'un effort utile, notamment d'un effort utile moyen, fourni par un individu pendant une activité physique consistant à exécuter un mouvement alternatif de pédalage sur un dispositif à pédalier, comportant un capteur de mesure d'une force d'appui sur une pédale du pédalier, distincte de l'effort utile, exercée par l'individu pendant un cycle de pédalage, caractérisé en ce qu'il comprend un module de détermination d'un maximum de la force d'appui mesurée durant un cycle de pédalage courant, et un estimateur d'effort utile destiné à estimer un effort utile moyen exercé par l'individu pendant ledit cycle de pédalage courant à partir du maximum de la force d'appui déterminé et à l'aide d'une fonction préétablie de corrélation entre un maximum de la force d'appui exercée pendant un cycle de pédalage et un effort utile moyen sur ledit cycle de pédalage.

Le dispositif comprend avantageusement les caractéristiques additionnelles suivantes :

- la force d'appui est mesurée à l'aide d'un capteur de pression équipant au moins l'une des pédales du pédalier ;

Selon l'invention, le procédé et le système comprend une mémoire de stockage d'une fonction affine de régression linéaire, constituant la fonction de corrélation.

L'invention concerne aussi un système d'estimation d'une puissance utile développée notamment de la puissance utile moyenne développée pendant un cycle de pédalage, par un individu pendant une activité physique consistant à exécuter un mouvement alternatif de pédalage sur un dispositif à pédalier, caractérisé en ce qu'il comprend

- un dispositif d'estimation de l'effort utile moyen exercé par l'individu pendant un cycle de pédalage, tel que précédemment défini,
- un capteur de mesure d'une accélération du pédalier pendant une succession de cycles de pédalage,
- un module de détermination d'une cadence de pédalage valide pour un cycle de pédalage courant, à partir des mesures d'accélération, et
- un calculateur de puissance utile destiné à calculer la puissance utile moyenne développée pendant un cycle de pédalage, à partir de l'effort utile moyen estimé pour ledit cycle de pédalage et de la cadence de pédalage valide déterminée pour ledit cycle de pédalage.

Le système comprend avantageusement tout ou partie des caractéristiques additionnelles suivantes :

- le capteur de mesure d'une accélération est disposé dans ou sur une pédale du pédalier ;
- le calculateur de puissance utile est agencé pour calculer le produit de l'effort utile moyen estimé pour un cycle de pédalage, d'une vitesse angulaire du pédalier valide pour ledit cycle de pédalage et de la longueur d'une manivelle du pédalier, ladite vitesse angulaire étant fonction de la cadence de pédalage déterminée ;
- le système comprend un premier module de test consistant à vérifier si la cadence de pédalage estimée est comprise entre 0,5 Hz et 2 Hz, le calculateur de puissance étant agencé pour inhiber le calcul de la puissance utile en cas de test négatif ;
- le système comprend un deuxième module de test visant à détecter des variations de l'accélération entre une valeur égale ou proche de +1 g et une valeur égale ou proche de -1 g, le calculateur de puissance étant agencé pour inhiber le calcul de la puissance utile en cas de test positif ;
- le système comprend un troisième module de test visant à détecter si l'accélération mesurée est contenue dans un gabarit prédéfini, le calculateur de puissance étant agencé pour inhiber le calcul de la puissance utile en cas de test négatif.

L'invention concerne encore un vélo à assistance électrique, comprenant un moteur électrique, une batterie d'alimentation et un dispositif de pilotage du moteur, caractérisé en ce qu'il comprend un système d'estimation d'une puissance utile développée par un individu pendant le pédalage sur ledit vélo, tel qu'il vient d'être défini, le dispositif de pilotage étant agencé pour piloter le moteur électrique en fonction de la puissance utile estimée.

L'invention concerne également un kit de motorisation pour vélo, comprenant un moteur électrique ou thermique, une batterie d'alimentation et un dispositif de pilotage du moteur, caractérisé en ce qu'il comprend un système d'estimation d'une puissance utile développée par un individu pendant le pédalage sur ledit vélo, tel que défini précédemment, le dispositif de pilotage étant agencé pour piloter le moteur en fonction de la puissance utile estimée.

**Description sommaire des dessins**

L'invention sera mieux comprise à l'aide de la description suivante d'un mode de réalisation particulier du procédé et du dispositif d'estimation de l'effort utile fourni par un cycliste en cours de pédalage, ainsi que du procédé et du système d'estimation de la puissance utile développée par le cycliste en cours de pédalage, selon l'invention, en référence aux dessins annexés sur lesquels :

- La figure 1 représente une vue de côté de façon schématique d'un pédalier de vélo, ainsi que les forces exercées par un cycliste sur le pédalier ;
- La figure 2 représente une autre vue de côté du pédalier de vélo de la figure 1, avec les forces transmises à une manivelle du pédalier lorsque le cycliste appuie sur la pédale ;
- La figure 3 représente une vue en perspective d'une pédale avec son repère orthonormé, selon un exemple de réalisation ;
- La figure 4 représente une vue de côté du pédalier de vélo de la figure 2 équipé d'un système d'estimation de la puissance utile développée par le cycliste selon un mode de réalisation particulier de l'invention ;
- La figure 5 représente un exemple de relevé de mesures d'une accélération selon l'axe $z_p$ de la pédale du pédalier de la figure 1 ;
- La figure 6 représente une droite de régression linéaire dans un repère comportant en ordonnées la force utile ou efficace moyenne sur un cycle de pédalage et en abscisses l'extremum de la force d'appui orthogonale à la pédale sur le cycle de pédalage ;

- La figure 7 représente un schéma bloc fonctionnel d'un système d'estimation de la puissance utile développée par un cycliste lors du pédalage ;

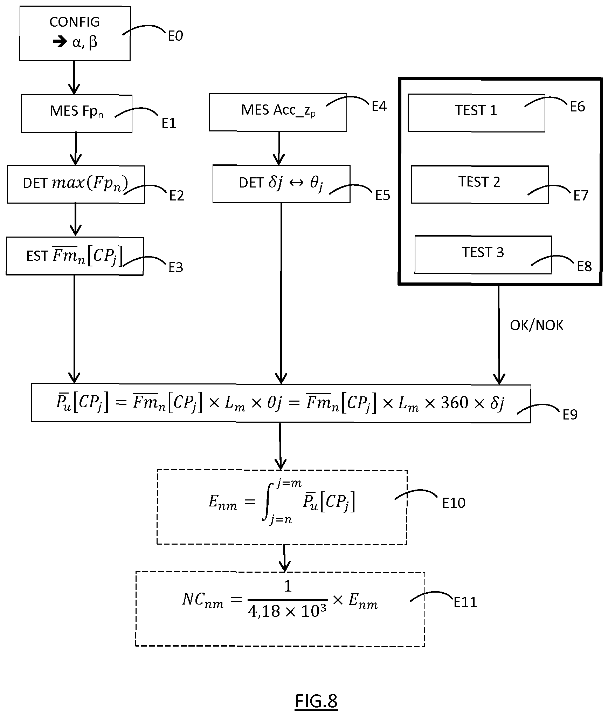

- La figure 8 représente un organigramme des étapes du procédé d'estimation de la puissance utile développée par un cycliste lors du pédalage.

**Description détaillée de modes de réalisation particuliers de l'invention**

L'invention vise à estimer l'effort (ou force) utile ou efficace fourni par un individu, ou cycliste, pendant une activité physique consistant à exécuter un mouvement alternatif de pédalage sur un dispositif à pédalier 4. Elle vise aussi à estimer la puissance utile développée par l'individu pendant le pédalage.

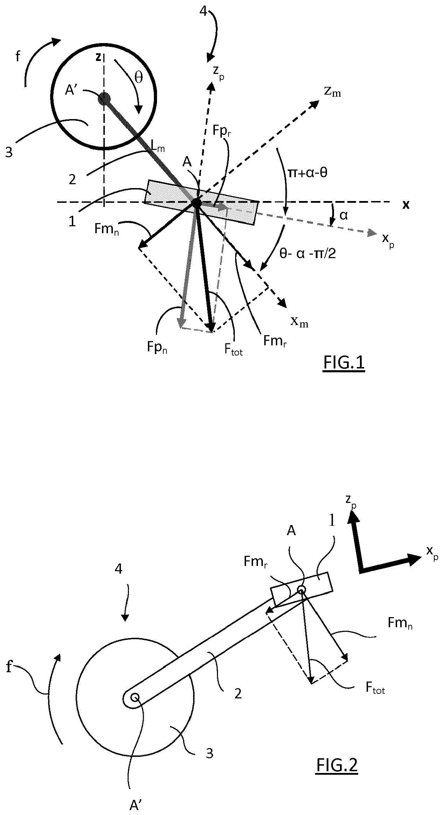

Dans l'exemple de réalisation décrit ici, le pédalier 4 équipe un vélo (ou bicyclette). En référence aux figures 1 et 2, le pédalier 4 comprend, de façon connue, deux pédales 1, deux manivelles 2 et un plateau de transmission 3. Les pédales 1 sont montées rotatives autour d'un axe de rotation A, chacune à l'une des extrémités de l'une des manivelles 2. L'autre extrémité de la manivelle 2 est reliée au plateau de transmission 3.

Lors du pédalage, le cycliste exécute un mouvement alternatif des jambes en appuyant sur les pédales 1 avec ses pieds. Le pédalier 4 convertit ce mouvement alternatif des jambes en un mouvement alternatif de rotation du pédalier 4 qui comporte une rotation des manivelles 2 et du plateau 3 autour d'un axe de rotation A', dans le sens représenté par la flèche f sur les figures 1 et 2. Ainsi, l'effort d'appui exercé par le cycliste sur les pédales 1 est transmis par les manivelles 2 au plateau 3 qui est entraîné en rotation.

La droite passant par les axes de rotation A et A' dans le plan de la figure 1 ou 2 définit un axe longitudinal de la manivelle 2.

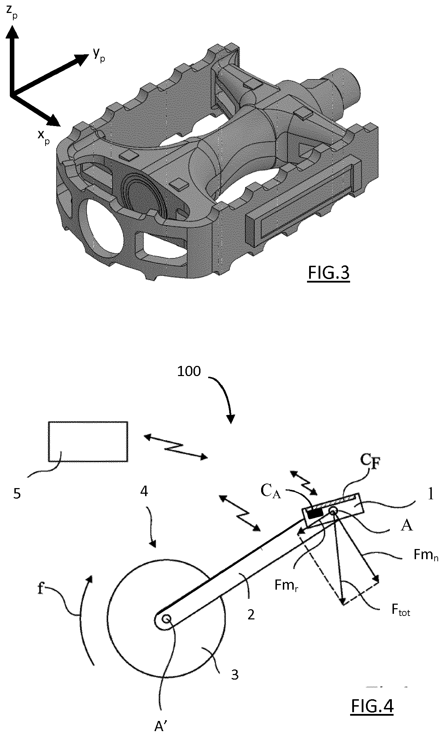

Sur la figure 3, on a représenté l'une des pédales 1, non instrumentée (c'est-à-dire sans capteur), selon un exemple particulier de réalisation, et un repère orthonormé $(x_p, y_p, z_p)$ associé à cette pédale 1. L'axe de rotation A de la pédale 1 est parallèle à la direction de l'axe $y_p$. La pédale 1 définit un plan d'appui du pied du cycliste, parallèle au plan $(x_p, y_p)$.

Un repère orthonormé $(x_m, y_m, z_m)$ est également associé à chaque manivelle 2. L'axe $x_m$ s'étend dans la direction de l'axe longitudinal de la manivelle 2. L'axe $y_m$ de la manivelle 2 est parallèle à l'axe $y_p$ de la pédale 1, ces deux axes $y_m$ et $y_p$ étant orthogonaux au plan des figures 1 et 2. Les axes $x_m$ et $z_m$ de la manivelle 2 sont décalés angulairement d'un angle $\theta$-$\alpha$-$\Pi/2$ par rapport aux axes $x_p$ et $z_p$ de la pédale 1, respectivement, $\theta$ représentant l'angle entre la verticale et l'axe longitudinal (ou l'axe $x_m$) de la manivelle 2 et $\alpha$ représentant l'angle entre l'horizontal et l'axe $x_p$ de la pédale 1.

L'effort exercé par le cycliste sur l'une ou l'autre des pédales 1 est représenté sur la figure 1 par la force $F_{tot}$ qui est la force totale d'appui sur la pédale 1 considérée. Cette force totale $F_{tot}$ d'appui exercée sur la pédale 1 considérée est en fait la somme d'une force (ou composante) radiale $Fp_r$, parallèle à l'axe $x_p$ de la pédale et d'une force (ou composante) normale $Fp_n$, parallèle l'axe $z_p$ de la pédale, comme représenté sur la figure 1. Notons que la force $Fp_n$ est la composante de la force d'appui exercée sur la pédale 1 qui est orthogonale au plan d'appui sur la pédale 1.

La force totale $F_{tot}$ d'appui sur la pédale 1 est transmise à la manivelle 2 associée. Elle peut se décomposer, au niveau de la manivelle 2, en une force (ou composante) radiale $Fm_r$, parallèle à l'axe $x_m$, et en une force (ou composante) normale $Fm_n$, parallèle à l'axe $z_m$. Cette force normale $Fm_n$ peut également être qualifiée de force « tangentielle » car elle est tangentielle à la trajectoire circulaire de la manivelle 2.

La force normale $Fm_n$ exercée sur la manivelle est celle qui a pour effet de mettre en mouvement le pédalier 4 et donc de propulser le vélo. Elle constitue l'effort (ou force) utile ou efficace, noté $F_u$, pour mettre en mouvement le pédalier 4 et par conséquent faire avancer le vélo. Autrement dit : $Fm_n = F_u$. Cette force normale ou tangentielle $Fm_n$ est la force motrice appliquée à la manivelle 2 du pédalier 4.

L'invention permet d'estimer l'effort (ou force) utile moyen fourni par le cycliste sur un cycle de pédalage, autrement dit sur un tour de pédalage durant lequel les manivelles 2 exécutent chacune une rotation de 360°. Cet effort utile moyen est estimé à partir d'une valeur maximale mesurée de la force normale d'appui $Fp_n$, exercée sur l'une ou l'autre des pédales 1 par le cycliste pendant le tour ou cycle de pédalage, et à l'aide d'une fonction préétablie de corrélation. Cette force normale d'appui $Fp_n$ appliquée à la pédale 1 constitue une force permettant d'évaluer la force utile $F_u$. L'invention permet également d'estimer la puissance utile moyenne développée par le cycliste sur un cycle ou tour de pédalage.

Notons que si une seule pédale est instrumentée (c'est-à-dire intègre un ou plusieurs capteurs pour mesure la force normale d'appui), seule la valeur maximale de la force normale d'appui sur cette pédale instrumentée est mesurée lors d'un cycle donné de pédalage. L'effort utile moyen du cycliste est ensuite évalué à partir de cette valeur maximale de la force normale d'appui sur la pédale instrumentée et à l'aide de la fonction de corrélation.

Dans une variante de réalisation, les deux pédales sont instrumentées. Dans ce cas, une première valeur maximale de la force d'appui sur une première pédale et une deuxième valeur maximale de la force d'appui sur la deuxième pédale sont mesurées lors d'un cycle de pédalage. Ensuite, une valeur maximale moyenne de la force normale d'appui peut être calculée à partir de ces deux valeurs maximales. Enfin, l'effort utile moyen du cycliste durant ce cycle de pédalage est calculé à partir de cette valeur maximale moyenne calculée et à l'aide de la fonction de corrélation.

En variante encore, les deux valeurs maximales de la force normale d'appui sur la première pédale et sur la deuxième pédale sont utilisées pour déterminer, à l'aide la fonction de corrélation, deux valeurs de l'effort moyen utile du cycliste durant le cycle de pédalage considéré. Ensuite, une moyenne de ces deux valeurs de l'effort moyen utile est calculée afin d'obtenir l'effort moyen utile pour le cycle de pédalage.

L'utilisation de deux pédales instrumentées permet d'obtenir une meilleure précision sur la valeur de l'effort moyen utile du cycliste sur le cycle de pédalage.

Sur la figure 4, on a représenté un système 100 d'estimation de puissance, destiné à estimer la puissance utile moyenne fournie par le cycliste sur un cycle de pédalage. Le système 100 comporte :

- un capteur $C_F$ de mesure de la force normale $Fp_n$ d'appui, exercée par le cycliste sur l'une des pédales 1, distincte de l'effort utile, pendant un cycle ou tour de pédalage ;
- un capteur $C_A$ de mesure de l'accélération de la pédale 1 selon l'axe $z_p$ du repère associé à la pédale 1 ;
- une unité de contrôle 5 intégrant :

  o un module 50 de détermination d'un maximum, ou extremum, de la force normale d'appui mesurée durant un cycle de pédalage, noté $max(Fp_n)$;
  o une mémoire 51 de stockage d'une fonction de corrélation entre l'effort utile moyen fourni par un cycliste durant un cycle (ou tour) de pédalage, noté $\overline{Fm_n}$, et le maximum de la force normale d'appui pendant ce cycle, noté $max(Fp_n)$;
  o un module 52 d'estimation d'une cadence de pédalage correspondant à un nombre de tours de pédalage par unité de temps, à partir des mesures d'accélération,
  o un estimateur d'effort 53 pour estimer l'effort utile moyen exercé par le cycliste pendant un cycle de pédalage, à partir de la valeur maximale de la force normale $Fp_n$ d'appui mesurée et à l'aide de la fonction de corrélation mémorisée, et
  o un calculateur de puissance 54 pour calculer la puissance utile moyenne développée pendant un cycle de pédalage à partir de l'effort utile moyen estimé pendant ce cycle de pédalage et de la cadence de pédalage déterminée.

Le capteur $C_F$ est un capteur de pression disposé dans ou sur la pédale 1. Il est adapté pour mesurer la force d'appui exercée par le cycliste orthogonalement à la pédale, autrement dit la force normale $Fp_n$. Le capteur $C_F$ peut être un simple capteur de pression du type utilisé dans les pèse-personne. Un exemple d'un tel capteur est décrit plus en détail dans le document WO2012/0386677.

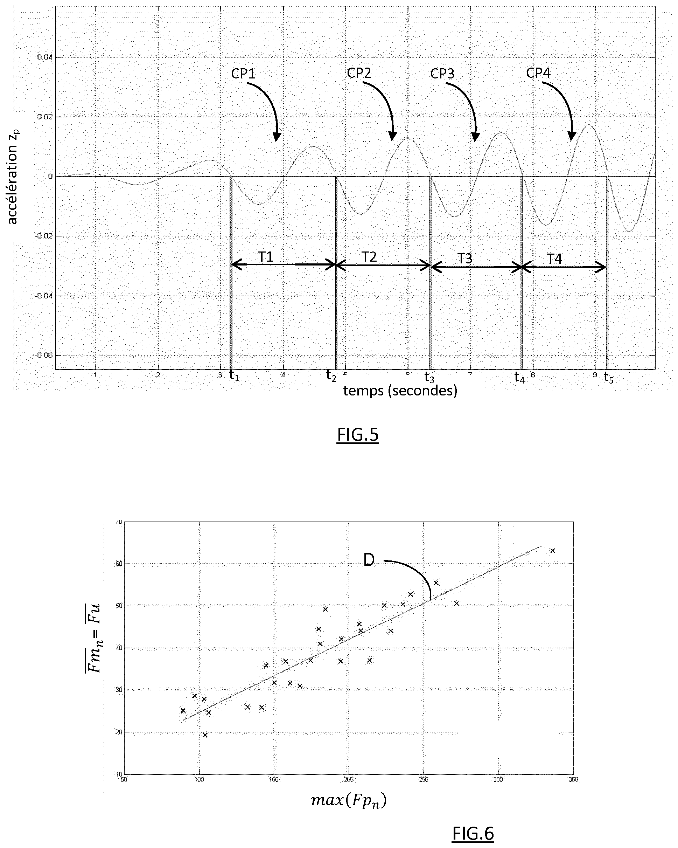

Le capteur $C_A$ est un accéléromètre intégré ici dans la même pédale 1 que celle équipée du capteur $C_F$. Il permet de mesurer l'accélération selon l'axe $z_p$ du repère de la pédale 1. Lors du pédalage, cette accélération oscille et décrit généralement un signal de type sinusoïdal, tel que représenté sur la figure 5 dont la période est directement liée à la cadence de pédalage, autrement dit à la vitesse angulaire du pédalier 4 (c'est-à-dire des manivelles 2). Ce signal d'accélération peut différer d'un signal sinusoïdal lorsque l'inclinaison de la pédale 1 varie au cours d'un cycle. Toutefois, il reste globalement périodique, avec deux changements de pente par période. La mesure de l'accélération à l'aide du capteur $C_A$ permet donc de déterminer la cadence de pédalage.

En variante, le capteur $C_A$ peut être positionné ailleurs que sur la pédale, sa position étant en toute hypothèse adaptée pour qu'il subisse des rotations dues au pédalage et que la mesure de l'accélération par le capteur $C_A$ permette de déterminer la fréquence de pédalage. Par exemple, le capteur $C_A$ est disposé dans la manivelle 2 sur laquelle est montée la pédale 1 comprenant le capteur $C_F$. Dans ce cas, l'accélération est mesurée selon l'axe $z_m$ du repère de la manivelle 2. Comme précédemment, la mesure de l'accélération à l'aide du capteur $C_A$ permet de déterminer la cadence de pédalage.

Dans l'exemple de réalisation décrit ici, l'une seule des deux pédales 1 est équipée d'un capteur $C_F$ et d'un capteur $C_A$ et on fait l'hypothèse que, pendant un tour ou cycle complet de pédalage, l'effort exercé sur l'une des pédales pendant le premier demi-tour de pédalage est analogue à celui exercé sur l'autre pédale pendant le deuxième demi-tour de pédalage. En variante, comme précédemment évoqué, chaque pédale 1 pourrait être équipée d'un couple de capteurs $C_F$ et $C_A$. Cela peut également permettre d'analyser le mouvement de pédalage d'un sportif pour détecter un éventuel déséquilibre dans ce mouvement.

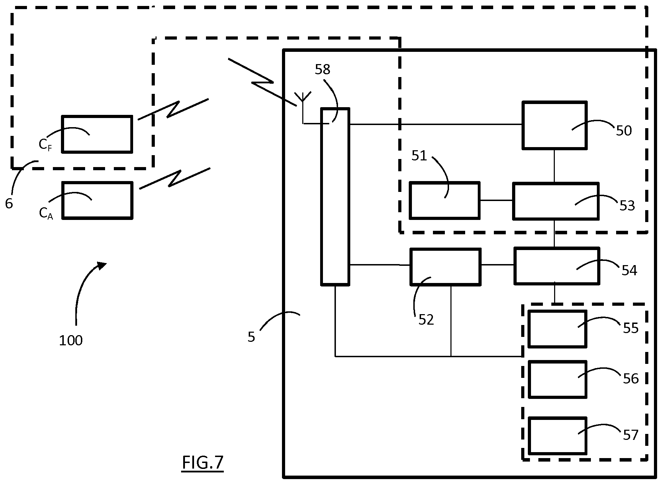

Selon l'invention, le procédé et le système comprend une liaison de communication, sans fil, est prévue entre chaque capteur $C_A$ et $C_F$ et l'unité de contrôle 5. A cet effet, l'unité de contrôle 5, le capteur $C_A$ et le capteur $C_F$ intègrent chacun un module de communication sans fil (seul le module de communication 58 de l'unité de contrôle 5 étant représenté sur la figure 7). Cette liaison permet à l'unité de contrôle 5 de contrôler le fonctionnement des capteurs $C_A$

et C$_F$ et d'assurer la transmission des données mesurées par les capteurs C$_A$ et C$_F$ à l'unité 5. La liaison pourrait être filaire.

Le module 50 de détermination d'un maximum de la force normale d'appui mesurée durant un cycle, ou tour, de pédalage intègre une mémoire de stockage de données de la force normale d'appui Fp$_n$ mesurées pendant un cycle complet de pédalage. Il est agencé pour analyser ces données mesurées et pour déterminer, parmi l'ensemble des données mesurées au cours d'un cycle de pédalage, la valeur maximale mesurée de la force normale Fp$_n$ d'appui sur la pédale 1.

La mémoire 51 stocke une fonction de corrélation entre l'effort utile (c'est-à-dire la force Fm$_n$) moyen fourni par un cycliste durant un cycle, ou tour, de pédalage et le maximum de la force normale d'appui Fp$_n$ pendant ce cycle. Dans l'exemple de réalisation décrit ici, cette fonction de corrélation est une fonction affine de régression linéaire de type y=$\alpha$.x+$\beta$, pouvant être représentée par une droite D telle que celle de la figure 6. Cette fonction affine relie le maximum, ou extremum, de la force d'appui Fp$_n$ normale à la pédale, noté *max(Fp$_n$)*, pendant un cycle de pédalage, représenté en abscisses, et la force efficace moyenne $\overline{Fm_n}$ (ou effort utile moyen) fournie par le cycliste durant ce cycle de pédalage représentée en ordonnées, par la relation :

$$\overline{Fm_n} = \alpha . max(Fp_n) + \beta$$

où a et $\beta$ sont des paramètres prédéfinis lors d'une phase de calibration.

Le capteur de force C$_F$, le module 50 de détermination de l'extremum de la force normale d'appui sur la pédale *max(Fp$_n$)* pendant un cycle, la mémoire 51 de stockage de la fonction affine de régression linéaire et l'estimateur 53 pour calculer une estimation de l'effort utile moyen exercé par le cycliste pendant un cycle de pédalage sont des éléments d'un dispositif 6 d'estimation de l'effort utile fourni par le cycliste.

Le calculateur de puissance 54 est destiné à calculer la puissance utile moyenne développée par le cycliste pendant un cycle de pédalage CP$_j$, cette puissance étant notée $\overline{P}_u[CP_j]$, à partir de l'effort utile moyen estimé pour ce cycle CP$_j$, noté $\overline{Fm_n}[CP_j]$, et de la cadence de pédalage déterminée $\delta j$ pour ce cycle CP$_j$, comme cela sera décrit ultérieurement, de façon plus détaillée, dans la description du procédé. Il est relié au module 52 de détermination de la cadence de pédalage et à l'estimateur d'effort 53.

L'unité de contrôle 5 peut également comprendre un ou plusieurs modules de test destinés à détecter des comportements d'usage du vélo ne permettant pas de faire une estimation fiable de l'effort utile fourni par le cycliste. Si l'un de ces tests détecte un tel comportement, la puissance utile n'est pas calculée.

Un premier module de test 55 est destiné à vérifier si la cadence de pédalage estimée est comprise entre 0,5 Hz et 2 Hz, le calculateur 54 étant agencé pour inhiber le calcul de la puissance utile moyenne pendant le cycle de pédalage CP$_j$ en cas de test négatif, c'est-à-dire en cas de détection d'une cadence de pédalage inférieure à 0,5 Hz ou supérieure à 2 Hz. Ce module de test 55 peut être connecté directement au module de détection de cadence de pédalage et inhiber le calcul de cadence en cas de test négatif.

Une deuxième module de test 56 est destiné à détecter des variations de l'accélération entre une valeur égale à ou proche de +1 g et une valeur égale à ou proche de -1 g, le calculateur 54 étant agencé pour inhiber le calcul de la puissance utile moyenne pendant le cycle de pédalage CP$_j$ en cas de test positif, c'est-à-dire en cas de détection de telles variations. Ce module de test 56 peut être connecté directement au module de détection de cadence de pédalage et inhiber le calcul de cadence si le test est positif.

Un troisième module de test 57 est destiné à détecter si l'accélération mesurée est contenue dans un gabarit prédéfini, stocké en mémoire, le calculateur 54 étant agencé pour inhiber le calcul de la puissance utile moyenne pendant le cycle de pédalage CP$_j$ en cas de test négatif.

On pourrait définir un quatrième module de test, qui vérifie le rapport entre l'accélération et la fréquence de pédalage. En effet, ces deux grandeurs sont proportionnelles durant un cycle de pédalage normal. Le test consisterait à vérifier que ce rapport reste compris dans une fourchette prédéfinie.

On pourrait aussi insérer une fonction de filtrage sur la cadence et la puissance calculée.

La fonction affine de régression linéaire est déterminée lors d'une étape préalable de calibration E0. Lors de cette calibration, on effectue un ensemble de mesures :

- de ladite force Fp$_n$ normale à la pédale 1 et
- de l'effort utile correspondant, autrement dit de la force Fm$_n$ orthogonale à la manivelle 2.

Ces mesures sont réalisées sur un pédalier équipant un vélo de référence. Le pédalier est équipé d'un dispositif de mesure de l'effort utile, par exemple le dispositif de mesure « Powerforce System » fabriqué par la société Radlabor, permettant de mesurer directement l'effort utile exercé par le cycliste pendant le pédalage. Ce dispositif de mesure est installé entre la pédale et la manivelle et permet de mesurer la force utile Fm$_n$ et la force radiale Fm$_r$, exercées sur la

manivelle, avec une fréquence d'échantillonnage de 1 kHz. La mesure de la force utile est réalisée simultanément sur les deux pédales, droite et gauche, et transmise par voie radio à une station de base reliée à un ordinateur. Le dispositif de mesure « Powerforce System » permet également de mesurer la cadence de pédalage et la puissance utile développée par le cycliste.

Lors de l'étape de calibration, on instrumente le vélo de référence à l'aide du dispositif de mesure « Powerforce System ». Puis, on réalise un ensemble de mesures avec une population variée de cyclistes et en balayant la plus grande plage possible de puissances utiles. Les données mesurées sont enregistrées puis traitées. Le traitement consiste à écarter les valeurs d'effort incohérentes du test, par exemple celles qui sont différentes d'au moins 20% de la moyenne des valeurs durant toute l'acquisition. Après ce traitement, les valeurs mesurées - c'est-à-dire les valeurs des efforts mesurés par la pédale et de l'effort utile mesuré par le dispositif de mesure référent « Powerforce System » - sont ré-échantillonnées sur un cycle de pédalage. Le ré-échantillonnage permet d'étudier et de comparer sur un cycle de pédalage deux systèmes différents, utilisant des fréquences d'échantillonnage différentes, indépendamment de la cadence de pédalage. A partir de ces valeurs ré-échantillonnées, on détermine un ensemble de couples de données comportant chacun le maximum de la force normale à la pédale, $max(Fp_n)$, pendant un cycle de pédalage, et la force $Fm_n$ moyenne (ou effort utile moyen), $\overline{Fm_n}$, fournie par un cycliste durant le cycle de pédalage. Ces couples de données $(max(Fp_n), \overline{Fm_n})$ constituent un ensemble, ou jeu, de points, comme représenté par des croix sur la figure 6. A partir de ce jeu de points, on construit une fonction affine $f_{aff}$ de la forme $y=\alpha x+\beta$, représentée par la droite D sur la figure 6, par régression linéaire, par exemple à l'aide de l'outil MATLAB®. On cherche ainsi à modéliser la relations entre les données $max(Fp_n)$, correspondant à la variable x, et $\overline{Fm_n}$, correspondant à la variable y, à l'aide d'une fonction affine de la forme $\gamma=\alpha x+\beta$. Le but est de trouver les paramètres $\alpha$ et $\beta$ permettant un ajustement optimal des couples (x,y), c'est-à-dire $(max(Fp_n), \overline{Fm_n})$, à la fonction affine. A l'issue de l'étape de calibration E0, la fonction affine de corrélation entre $max(Fp_n)$ et $\overline{Fm_n}$, et notamment les paramètres $\alpha$ et $\beta$ optimaux déterminés, sont mémorisés dans la mémoire 51.

La fonction affine $f_{aff}$ ainsi déterminée à partir d'un vélo de référence instrumenté avec le dispositif de mesure « Powerforce System » peut être utilisée par des systèmes d'estimation de puissance selon l'invention équipant un ensemble de vélos analogues ou de la même catégorie de vélo (course, VTC ou VTT) que le vélo de référence. En effet, en réalisant l'étape de calibration sur un vélo de référence de même type, par exemple un vélo de type Vélo Tout Terrain, Vélo Tout Chemin ou vélo de route ou de course, que le vélo destiné à être équipé du système d'estimation de puissance décrit ici, on optimise l'ajustement des couples (x,y), c'est-à-dire $(max(Fp_n), \overline{Fm_n})$, à la fonction de corrélation. Cela permet avantageusement d'obtenir une valeur de l'effort utile moyen plus précise.

En variante, par exemple dans le cas où le système d'estimation de puissance est destiné à équiper le vélo d'un sportif de haut niveau, l'étape de calibration pourra être effectuée directement avec ce vélo et ce sportif uniquement. La fonction de corrélation ainsi obtenue est ensuite mémorisée dans la mémoire 51, par exemple en utilisant des moyens de communication de l'unité de contrôle. Lorsque ce sportif de haut niveau utilise son vélo instrumenté avec le système d'estimation de puissance ainsi calibré, la valeur de l'effort utile moyen obtenue est plus précise.

Bien que l'on ait décrit ici un cas où la fonction de corrélation est une fonction affine de régression linéaire de type $y=\alpha.x+\beta$, on comprend que l'on peut utiliser d'autres fonctions de corrélation, par exemple un polynôme de degré 2 ou plus. En outre, plus la fonction de corrélation utilisée optimise l'ajustement des couples (x,y), c'est-à-dire $(max(Fp_n), \overline{Fm_n})$, à la fonction de corrélation, plus la valeur de l'effort utile moyen déterminée sera précise. Une telle optimisation de l'ajustement est plus particulièrement intéressante dans le cas d'un sportif de haut niveau pour lequel on souhaite que la mesure de l'effort utile moyen soit la plus précise possible.

On va maintenant décrire le procédé d'estimation d'un effort utile moyen fourni par un cycliste en cours de pédalage sur le vélo équipé du pédalier 4, selon un mode de réalisation particulier de l'invention, en référence à la figure 7.

Le procédé d'estimation de l'effort utile comporte une étape E1 de mesure de la force d'appui $Fp_n$ exercée par le cycliste orthogonalement à la pédale instrumentée 1. Les mesures sont réalisées par le capteur de pression $C_F$ avec une fréquence d'échantillonnage par exemple égale à 100 Hz. Les données mesurées sont transmises au dispositif central 5.

L'étape de mesure E1 est suivie d'une étape E2 de traitement des données mesurées, lors de laquelle l'unité de contrôle 5 détermine la valeur maximale $max(Fp_n)$ de la force normale d'appui mesurée pendant un cycle de pédalage $CP_j$, à partir des données mesurées sur le cycle de pédalage $CP_j$.

Le procédé comprend ensuite une étape E3 d'estimation de l'effort utile moyen exercé par le cycliste pendant le cycle de pédalage $CP_j$ à partir de la valeur maximale $max(Fp_n)$ de la force mesurée sur ce cycle $CP_j$ et à l'aide de la fonction affine préétablie $f_{aff}$ de corrélation entre l'effort utile moyen sur un cycle et le maximum de la force pendant ce cycle $max(Fp_n)$. On note $\overline{F_u}[CP_j]$ l'effort utile moyen sur le cycle de pédalage $CP_j$. En référence à la figure 6, on détermine ainsi l'effort utile moyen pour le cycle $CP_j$ qui correspond à la valeur maximale $max(Fp_n)$ de la force mesurée sur ce cycle $CP_j$ par la fonction affine $y=\alpha x+\beta$ (ou par la droite de régression linéaire D de la figure 6). Autrement dit, on cherche à déterminer la valeur de y, correspondant à l'effort utile moyen sur le cycle CP$_j$, à partir de la valeur x égale à $max(Fp_n)$ pour ce cycle CP$_j$ par la relation y=αx+β. Cette étape E3 est mise en œuvre par l'estimateur 53 de l'unité de contrôle 5.

On va maintenant décrire le procédé d'estimation de la puissance utile développée par le cycliste en cours de pédalage sur le vélo équipé du pédalier 4, selon un mode de réalisation particulier de l'invention. Il permet d'estimer la puissance utile moyenne fournie par le cycliste sur un cycle de pédalage courant noté CP$_j$ (avec j = 1, 2, ....). On note $\overline{P}_u[CP_j]$ la puissance utile moyenne pour le cycle CP$_j$.

L'estimation de la puissance utile $\overline{P}_u[CP_j]$ comporte une estimation de l'effort utile moyen $\overline{F}_u[CP_j]$ exercé par le cycliste pendant un cycle de pédalage courant CP$_j$. Cet effort utile moyen $\overline{F}_u[CP_j]$ correspond à la force tangentielle (ou orthogonale) moyenne transmise à la manivelle 2, notée $\overline{Fm}_n[CP_j]$, lors du cycle de pédalage CP$_j$. Cette estimation est réalisée par la mise en œuvre du procédé d'estimation qui vient d'être décrit, comportant les étapes E1 à E3.

Le procédé comprend en outre une étape E4 de mesure de l'accélération de la pédale 1 selon l'axe z$_p$ du repère de la pédale 1, à l'aide du capteur C$_A$. Cette étape de mesure est réalisée pendant N cycles de pédalage successifs, dont l'un, par exemple le N$^{ième}$ cycle, est le cycle de pédalage courant CP$_j$ pour lequel on cherche à estimer la puissance utile développée par le cycliste.

L'étape de mesure E4 est suivie d'une étape E5 d'estimation de la cadence de pédalage courante, valide lors du cycle de pédalage CP$_j$. La cadence de pédalage correspond au nombre de cycles de pédalage par unité de temps. L'estimation de la cadence de pédalage est faite à partir des mesures d'accélération. Le signal d'accélération est généralement de type sinusoïdal, comme représenté sur la figure 5, et en toute hypothèse périodique. Notons Ti la durée d'une période du signal d'accélération, c'est-à-dire l'intervalle de temps entre deux points semblables successifs du signal. La période Ti correspond à la durée du cycle de pédalage CP$_j$. Afin d'estimer la cadence de pédalage valide lors du cycle CP$_j$, l'unité de contrôle 5 calcule ici une période moyenne $\overline{Tj}$ du signal d'accélération à partir des périodes mesurées pour les N cycles CP$_{j-N+1}$ à CP$_j$ par la relation suivante :

$$\overline{T_J} = \frac{1}{N} * \sum_{i=j-N+1}^{i=j} T_i$$

Bien que dans la formule ci-dessus on effectue une division par le nombre N de cycles, on peut également ne pas faire cette division pour diminuer la complexité de calcul et ainsi réduire le temps de calcul. Ce dernier cas est particulièrement avantageux lorsque que le calcul est mis en œuvre par un microcontrôleur dont les ressources calculatoires sont limitées.

Notons que, sur la figure 5, le signal d'accélération est centré sur zéro en ordonnées. Or, en pratique, selon la face de la pédale utilisée comme face d'appui du pied du cycliste, l'accélération est centrée soit autour de +1 g, soit autour de -1 g, où 1 g représente l'accélération de la pesanteur à la surface de la Terre (l'accélération de la pesanteur standard valant 9,80665 m·s$^{-2}$). Afin de centrer le signal d'accélération autour de zéro, différentes solutions sont envisageables. Dans le mode de réalisation décrit ici, la solution consiste à retrancher au signal d'accélération mesuré sa valeur moyenne obtenue par un filtrage récursif passe-bas avec une faible fréquence d'échantillonnage, par exemple de l'ordre de 0,1 Hz.

Puis l'unité de contrôle 5 calcule la cadence de pédalage δj valide pour le cycle CP$_j$ par la relation :

$$\delta j = \frac{1}{\overline{T_J}}$$

La cadence de pédalage δj est exprimée en Hertz. Elle peut être convertie en vitesse angulaire $\dot{\theta}_J$, exprimée par exemple en radians par seconde, par la relation :

$$\dot{\theta}_J = 2\pi \times \delta j$$

Dans le mode de réalisation décrit ici, le procédé comprend une première étape de test E6 visant à détecter une variation de l'accélération entre deux valeurs égales ou sensiblement égales à +1 g et -1 g respectivement (« g » représentant l'unité de mesure de l'accélération). Selon le sens des faces de la pédale pendant le pédalage, le signal d'accélération mesuré varie soit autour de +1 g, soit autour de -1 g. Si on détecte un signal d'accélération qui varie d'une valeur égale ou proche de +1 g à une valeur égale ou proche de -1 g ou bien d'une valeur égale ou proche de -1 g à une valeur égale ou proche de +1 g, cela révèle des changements de face intempestifs de la pédale. Notons que par les expressions « proche de +1 g » et « proche de -1 g », on entend signifier ici « compris entre 0,8 g et 1 g » et « compris entre -1 g et -0.8 g », respectivement.

En cas de test E6 positif, autrement dit en cas de détection de changements de face de la pédale intempestifs, le calcul de la puissance utile moyenne pour le cycle CP$_j$ est inhibé (c'est-à-dire bloqué ou interrompu).

Le procédé comprend ici une deuxième étape de test E7 consistant à vérifier si la cadence estimée est comprise dans une plage de valeurs possibles prédéfinies, en l'espèce [0,5Hz ; 2Hz]. Les bornes de cette plage, à savoir 0,5Hz et 2Hz, correspondent à la cadence minimale de pédalage possible, au-dessous de laquelle le vélo n'est plus maintenu en équilibre, et à la cadence maximale de pédalage qu'un cycliste peut atteindre du fait de paramètres physiologiques.

Si le test E7 est négatif, la cadence estimée étant inférieure à 0,5Hz ou supérieure à 2Hz, le calcul de la puissance utile est inhibé, c'est-à-dire bloqué ou interrompu. Cela permet d'éliminer les estimations de puissance faussées, par exemple du fait que le cycliste fait tourner la pédale autour de son axe A.

Si le test E7 est positif, la cadence estimée étant comprise entre 0,5Hz et 2Hz, le procédé passe à l'étape suivante.

Le procédé peut également comprendre une troisième étape de test E8 utilisant un gabarit du signal d'accélération. Ce gabarit est établi à partir d'une relation entre l'amplitude de l'accélération selon z$_p$ et la cadence de pédalage $\delta j$. Cette relation est la suivante :

$$a_c = \dot{\theta}j^2 * L_m,$$

où

- $a_c$ est l'accélération centripète ;
- $\dot{\theta}_J$ est la vitesse de rotation ;
- $L_m$ est la longueur de la manivelle.

Cette accélération, colinéaire à la manivelle, s'ajoute aux accélérations propres vues par la pédale. Elle permet de construire le gabarit.

La troisième étape de test E8 consiste à vérifier si l'accélération mesurée est comprise dans le gabarit ou bien est hors gabarit (si elle est anormalement basse ou anormalement haute). En cas de test positif (accélération dans le gabarit), le procédé passe à l'étape suivante. En cas de test négatif (accélération hors gabarit), le calcul de la puissance utile est inhibé, c'est-à-dire bloqué ou interrompu.

L'étape de calcul E9 vise à calculer la puissance utile moyenne développée pendant le cycle CP$_j$, $\overline{P_u}[CP_j]$, à partir de l'effort utile moyen estimé pour ce cycle CP$_j$, $\overline{F_u}[CP_j]$ ou $\overline{Fm_n}[CP_j]$, et de la cadence de pédalage courante déterminée $\delta j$ pour ce cycle CP$_j$, par la relation :

$$\overline{P_u}[CP_j] = \overline{Fm_n}[CP_j] \times L_m \times \dot{\theta}_J = \overline{Fm_n}[CP_j] \times L_m \times 2\pi \times \delta j$$

où :

- $\overline{Fm_n}[CP]$ ou $\overline{F_u}[CP_j]$ représente l'effort utile (ou force) moyen exercé par un cycliste lors du cycle de pédalage CP$_j$ ;
- $L_m$ représente la longueur de la manivelle 2, exprimée en m ;
- $\dot{\theta}$ représente la vitesse angulaire du pédalier 4 ou de la manivelle 2, exprimée en radians par seconde
- $\delta j$ représente la cadence de pédalage exprimée en Hz.

L'estimation de la puissance utile ainsi réalisée offre une précision de l'ordre de 10%. Elle est réalisée à partir de mesures simples à effectuer, requérant deux capteurs C$_F$ et C$_A$ peu onéreux et faciles à mettre en place simplement au niveau d'une pédale, et à l'aide de calculs légers, nécessitant peu de ressources énergétiques.

La puissance utile moyenne calculée lors de chaque cycle de pédalage peut être affichée sur un écran de l'unité de contrôle 5. Le cycliste peut ainsi en prendre connaissance afin de gérer son effort.

Dans le cas où le calcul de la puissance utile moyenne est inhibé suite à l'un des tests précédemment décrits, l'écran peut afficher soit une valeur de puissance nulle, soit un message d'erreur du type « error », soit la précédente valeur estimée de puissance utile.

La puissance utile ainsi estimée peut également être utilisée pour faire une estimation des calories dépensées par le cycliste. Pour estimer la quantité de calories dépensées par le cycliste pendant une période de pédalage, on intègre dans le temps la puissance utile calculée par le procédé qui vient d'être décrit, lors d'une première étape de calcul E10, puis on convertit en calories de l'énergie ainsi calculée, lors d'une deuxième étape de calcul E11. La conversion consiste par exemple à diviser l'énergie exprimée en joules calculée par intégration à l'étape E10 par le facteur $4{,}18 \times 10^3$ afin d'obtenir un nombre de calories dépensées exprimé en kcal (1 calorie valant 4,18 joules). A cet effet, l'unité de contrôle 5 peut intégrer un calculateur (non représenté) pour réaliser l'intégration dans le temps de la puissance utile calculée et la conversion en calories de l'énergie ainsi calculée.

Le système 100 d'estimation de la puissance utile développée par le cycliste pendant le pédalage qui vient d'être décrit peut équiper un vélo à assistance électrique. La puissance utile estimée peut servir à mieux gérer l'assistance électrique au pédalage. Le niveau de puissance fourni par le moteur peut être réglé de sorte à ce que cette puissance utile moyenne fournie par le cycliste reste égale à une valeur prédéfinie ou reste comprise dans une plage de valeurs prédéfinies. Cette ou ces valeurs prédéfinies de puissance utile fournie par le cycliste peuvent être choisies de sorte à requérir un effort modéré et régulier au cycliste durant le pédalage, quel que soit de niveau d'effort requis pour propulser le vélo. Le cycliste fournit ainsi un effort modéré et régulier durant le pédalage, même si la et la consommation électrique du moteur est réduite. Le confort de pédalage du cycliste est amélioré car il ne pédale ni dans le vide, ni de façon trop intensive. Lorsque la puissance utile moyenne pour un cycle n'est pas calculée car l'un des tests réalisés a détecté une anomalie, l'assistance du vélo électrique utilise la puissance utile moyenne calculée pour le précédent cycle de pédalage sans anomalie détectée. L'invention concerne donc aussi un vélo à assistance électrique, comprenant un moteur électrique, une batterie d'alimentation électrique, un dispositif de pilotage du moteur, et un système d'estimation d'une puissance utile développée par un individu pendant le pédalage sur ledit vélo, tel que précédemment décrit, le dispositif de pilotage étant agencé pour piloter le moteur électrique en fonction de la puissance utile estimée.

L'invention concerne également un vélo à assistance électrique, comprenant un moteur électrique, une batterie d'alimentation, un dispositif de pilotage du moteur et un système d'estimation de la puissance utile développée par le cycliste pendant le pédalage sur le vélo, tel que précédemment décrit, le dispositif de pilotage étant agencé pour piloter le moteur électrique en fonction de la puissance utile estimée.

L'invention concerne encore un kit de motorisation pour vélo, comprenant un moteur, par exemple électrique ou thermique, une batterie d'alimentation électrique, un dispositif de pilotage du moteur, et un système d'estimation d'une puissance utile développée par un individu pendant le pédalage sur ledit vélo, tel que précédemment décrit, le dispositif de pilotage étant agencé pour piloter le moteur électrique en fonction de la puissance utile estimée.

Dans tout ce document, par « mouvement alternatif de pédalage », on entend de préférence un mouvement dans lequel un individu exerce alternativement des efforts sur une première pédale et sur une deuxième pédale d'un pédalier ou d'un dispositif à pédalier. Il s'ensuit qu'on entend de préférence par « mouvement alternatif de rotation de deux manivelles » ou « mouvement alternatif de rotation du pédalier », un mouvement unidirectionnel de rotation des manivelles ou du pédalier qui est la conséquence des actions de l'individu qui exerce alternativement des efforts sur une première pédale et sur une deuxième pédale du pédalier.

**Revendications**

1. Procédé d'estimation d'une puissance utile développée par un individu pendant une activité physique consistant à exécuter un mouvement alternatif de pédalage sur un dispositif à pédalier (4), le procédé comprend une estimation (E1-E3) d'un effort utile moyen ($\overline{F}_u[CPj]$) exercé par l'individu pendant un cycle de pédalage courant (CPj), par la mise en œuvre d'un procédé comportant :

   - une étape (E1) de mesure d'une force d'appui ($Fp_n$) sur une pédale (1) du pédalier (4) par un capteur de mesure d'une force ($C_F$) équipant la pédale (1), distincte de l'effort utile, exercée par l'individu pendant le cycle de pédalage ($CP_j$),
   - une étape (E2) de détermination d'un maximum ($max(Fp_n)$) de la force d'appui mesurée durant le cycle de pédalage (CPj), et
   - une étape (E3) d'estimation d'un effort utile moyen exercé par l'individu pendant ledit cycle de pédalage ($CP_j$) à partir du maximum de la force d'appui déterminé ($max(Fp_n)$) et à l'aide d'une fonction préétablie de corrélation ($f_{aff}$, D) entre un maximum de force d'appui pendant un cycle de pédalage et un effort utile moyen sur ledit cycle, **caractérisé en ce que** ladite fonction de

   corrélation ($f_{aff}$, D) étant stockée dans une mémoire (51) d'un dispositif (6) d'estimation d'un effort utile, ladite fonction préétablie étant une fonction affine de régression linéaire définie par la fonction $y = \alpha.x + \beta$ où y désigne l'effort utile moyen exercé par l'individu pendant ledit cycle de pédalage, où x désigne le maximum de force d'appui pendant le cycle de pédalage, et où $\alpha$ et $\beta$ sont des paramètres prédéfinis lors d'une phase de calibration,

le procédé d'estimation d'une puissance utile comprenant :

- une étape (E4) de mesure d'une accélération du pédalier (4) pendant une succession de cycles de pédalage par un capteur d'accélération (CA),
- une étape (E5) de détermination d'une cadence de pédalage valide pour le cycle de pédalage courant (CPj), à partir des mesures d'accélération, et
- une étape (E9) de calcul de la puissance utile moyenne ($\overline{P}_u[CP_j]$) développée pendant le cycle de pédalage courant (CPj), à partir de l'effort utile moyen estimé pour ledit cycle de pédalage courant (CP$_j$) et de la cadence de pédalage estimée valide pour ledit cycle de pédalage courant (CPj),

le procédé d'estimation d'une puissance utile étant mis en œuvre par une unité de contrôle (5), intégrant un estimateur d'effort utile (53) et un calculateur de puissance utile (54), l'unité de contrôle étant agencée pour communiquer par liaison sans fil avec le capteur de force et avec le capteur d'accélération équipant une pédale du pédalier.

2. Procédé selon la revendication précédente, **caractérisé en ce que** :

- l'effort utile estimé est la composante tangentielle ($Fm_n$) d'une force transmise à la manivelle (2) par appui sur la pédale (1) ; et/ou
- la force d'appui mesurée ($Fp_n$) est la composante d'une force totale d'appui (Ftot) exercée par l'individu sur la pédale (1), qui est orthogonale à un plan d'appui sur la pédale (1) ; et/ou
- lors d'une étape préalable de calibration (E0), on détermine la fonction de corrélation à partir d'un ensemble de mesures de ladite force d'appui et de mesures de l'effort utile correspondant.

3. Procédé selon l'une des revendications précédentes, **caractérisé en ce que**, lors de l'étape (E9) de calcul de la puissance utile ($\overline{P}_u[CP_j]$), on calcule le produit de l'effort utile moyen ($\overline{F}_u[CP_j]$) estimé durant le cycle de pédalage courant (CPj), d'une vitesse angulaire courante ($\theta_j$) et de la longueur ($L_m$) d'une manivelle (2) du pédalier (4), ladite vitesse angulaire ($\theta_j$) étant fonction de la cadence de pédalage estimée ($\delta_j$) valide pour le cycle de pédalage courant (CPj).

4. Procédé selon l'une des revendications précédentes, **caractérisé en ce que** :

- le procédé comprend une étape de test (E6) consistant à vérifier si la cadence de pédalage estimée ($\delta_j$) est comprise entre 0,5 Hz et 2 Hz et **en ce que** le calcul de la puissance utile moyenne ($\overline{P}_u[CP_j]$) pendant le cycle de pédalage (CP$_j$) est inhibé en cas de test négatif ; et/ou
- le procédé comprend une étape de test (E7) visant à détecter des variations de l'accélération d'une valeur égale ou proche à +1 g à une valeur égale ou proche à -1 g et d'une valeur égale ou proche à -1 g à une valeur égale ou proche à +1 g, et **en ce que** le calcul (E9) de la puissance utile moyenne pour le cycle de pédalage courant (CP$_j$) est inhibé en cas de test positif ; et/ou
- le procédé comprend une étape de test (E8) visant à détecter si l'accélération mesurée est contenue dans un gabarit prédéfini et, en cas de test négatif, le calcul de la puissance utile moyenne pour le cycle de pédalage courant (CP$_j$) est inhibé.

5. Utilisation du procédé d'estimation d'une puissance utile développée par un individu pendant une activité physique consistant à exécuter un mouvement alternatif de pédalage sur un dispositif à pédalier, selon l'une des revendications précédentes, pour estimer une quantité de calories dépensées par l'individu pendant l'activité physique, comprenant une étape (E10) d'intégration dans le temps de la puissance estimée afin de calculer une estimation de l'énergie dépensée et une étape (E11) de conversion en calories de l'énergie dépensée estimée.

6. Système d'estimation d'une puissance utile développée par un individu pendant une activité physique consistant à exécuter un mouvement alternatif de pédalage sur un dispositif à pédalier, le système comprend :

- un dispositif d'estimation d'un effort utile fourni par un individu pendant une activité physique consistant à exécuter un mouvement alternatif de pédalage sur un dispositif à pédalier, comportant un capteur ($C_F$) de mesure d'une force d'appui ($Fp_n$) sur une pédale (1) du pédalier (4), distincte de l'effort utile, exercée par l'individu pendant un cycle de pédalage (CPj), **caractérisé en ce qu'**il comprend un module (50) de détermination d'un maximum de la force d'appui mesurée ($max(Fp_n)$) durant un cycle de pédalage courant (CPj), un estimateur d'effort utile (53) destiné à estimer un effort utile moyen ($\overline{F}_u[CP_j]$) exercé par l'individu pendant ledit cycle de pédalage courant ($CP_j$) à partir du maximum de la force d'appui déterminé (*max(Fp_n)*) et à l'aide d'une fonction préétablie de corrélation ($f_{aff}$) entre un maximum de la force d'appui exercée pendant un cycle de pédalage et un effort utile moyen sur ledit cycle de pédalage, **caractérisé en ce que**

ladite fonction préétablie étant une fonction affine de régression linéaire définie par la fonction $y = \alpha.x + \beta$ où y désigne l'effort utile moyen exercé par l'individu pendant ledit cycle de pédalage, où x désigne le maximum de force d'appui pendant le cycle de pédalage, et où $\alpha$ et $\beta$ sont des paramètres prédéfinis lors d'une phase de calibration, et une mémoire (51) de stockage de ladite fonction de corrélation ($f_{aff}$), le système comprend :

- un capteur ($C_A$) de mesure d'une accélération du pédalier (4) pendant une succession de cycles de pédalage,
- un module (52) de détermination d'une cadence de pédalage ($\delta j$) valide pour un cycle de pédalage courant ($CP_j$), à partir des mesures d'accélération, et
- un calculateur de puissance utile (54) destiné à calculer la puissance utile moyenne développée pendant un cycle de pédalage, à partir de l'effort utile moyen estimé pour ledit cycle de pédalage ($CP_j$) et de la cadence de pédalage valide déterminée pour ledit cycle de pédalage (CPj), et le système comprend une unité de contrôle (5), intégrant l'estimateur d'effort utile (53) et le calculateur de puissance utile (54), agencée pour communiquer par liaison sans fil avec le capteur de force (CF) et avec le capteur d'accélération (CA ) équipant une pédale (1) du pédalier (4).

**7.** Système selon la revendication précédente, **caractérisé en ce que** la force d'appui est mesurée à l'aide d'un capteur de pression ($C_F$) équipant au moins l'une des pédales (1) du pédalier (4) .

**8.** Système selon l'une des revendications 6 ou 7, **caractérisé en ce que** le capteur de mesure d'une accélération ($C_A$) est disposé dans ou sur une pédale (1) du pédalier (4).

**9.** Système selon l'une des revendications 6 à 8, **caractérisé en ce que** le calculateur de puissance utile (54) est agencé pour calculer le produit de l'effort utile moyen estimé pour un cycle de pédalage (CPj), d'une vitesse angulaire ($\theta j$) du pédalier (4) valide pour ledit cycle de pédalage ($CP_j$) et de la longueur ($L_m$) d'une manivelle (3) du pédalier (4), ladite vitesse angulaire ($\theta j$) étant fonction de la cadence de pédalage déterminée ($\delta j$).

**10.** Système selon l'une des revendications 6 à 9, **caractérisé en ce que** :

- le système comprend un premier module de test (55) consistant à vérifier si la cadence de pédalage estimée est comprise entre 0,5 Hz et 2 Hz, le calculateur de puissance étant agencé pour inhiber le calcul de la puissance utile en cas de test négatif ; et/ou
- le système comprend un deuxième module de test (56) visant à détecter des variations de l'accélération entre une valeur égale ou proche de +1 g et une valeur égale ou proche de -1 g, le calculateur de puissance (54) étant agencé pour inhiber le calcul de la puissance utile en cas de test positif ; et/ou
- le système comprend un troisième module de test (57) visant à détecter si l'accélération mesurée est contenue dans un gabarit prédéfini, le calculateur de puissance (54) étant agencé pour inhiber le calcul de la puissance utile en cas de test négatif.

**11.** Vélo à assistance électrique, comprenant un moteur électrique, une batterie d'alimentation et un dispositif de pilotage du moteur, **caractérisé en ce qu'**il comprend un système (100) d'estimation d'une puissance utile développée par un individu pendant le pédalage sur ledit vélo, selon l'une des revendications 6 à 10, le dispositif de pilotage étant agencé pour piloter le moteur électrique en fonction de la puissance utile estimée.

**12.** Kit de motorisation pour vélo, comprenant un moteur électrique ou thermique, une batterie d'alimentation et un dispositif de pilotage du moteur, **caractérisé en ce qu'**il comprend un système d'estimation d'une puissance utile développée par un individu pendant le pédalage sur ledit vélo, selon l'une des revendications 6 à 10, le dispositif de pilotage étant agencé pour piloter le moteur en fonction de la puissance utile estimée.

**Patentansprüche**

**1.** Verfahren zur Schätzung einer von einer Person während einer körperlichen Aktivität, die darin besteht, eine abwechselnde Tretbewegung auf einer Tretlagervorrichtung (4) auszuführen, entwickelten Nutzleistung, das Verfahren enthält eine Schätzung (E1-E3) einer von der Person während eines aktuellen Tretzyklus ($CP_j$) ausgeübten mittleren Nutzbeanspruchung ($\overline{F}_u[CP_j]$) durch die Anwendung eines Verfahrens, das aufweist:

- einen Schritt (E1) der Messung einer Auflagekraft ($Fp_n$) auf ein Pedal (1) des Tretlagers (4) durch einen in das Pedal (1) eingebauten Sensor ($C_F$) zur Messung einer sich von der Nutzbeanspruchung unterscheidenden Kraft, die von der Person während des Tretzyklus ($CP_j$) ausgeübt wird,
- einen Schritt (E2) der Bestimmung eines Maximums (*max(Fp_n)*) der während des Tretzyklus ($CP_j$) gemessenen Auflagekraft, und
- einen Schritt (E3) der Schätzung einer von der Person während des Tretzyklus ($CP_j$) ausgeübten mittleren Nutzbeanspruchung ausgehend vom bestimmten Maximum der Auflagekraft (*max(Fp_n)*) und mit Hilfe einer vorab erstellten Korrelationsfunktion ($f_{aff}$, D) zwischen einem Auflagekraftmaximum während eines Tretzyklus und einer mittleren Nutzbeanspruchung im Zyklus,

**dadurch gekennzeichnet, dass** die Korrelationsfunktion ($f_{aff}$, D) in einem Speicher (51) einer Schätzvorrichtung (6) einer Nutzbeanspruchung gespeichert ist, die vorab erstellte Funktion eine durch die Funktion y = $\alpha \cdot \mathbf{x}$ + $\beta$ definierte affine lineare Regressionsfunktion ist, in der y die von der Person während des Tretzyklus ausgeübte mittlere Nutzbeanspruchung bezeichnet, in der x das Auflagekraftmaximum während des Tretzyklus bezeichnet, und in der $\alpha$ und $\beta$ während einer Kalibrierungsphase vordefinierte Parameter sind, wobei das Schätzverfahren einer Nutzleistung enthält:

- einen Schritt (E4) der Messung einer Beschleunigung des Tretlagers (4) während einer Folge von Tretzyklen durch einen Beschleunigungssensor ($C_A$),
- einen Schritt (E5) der Bestimmung einer gültigen Tretkadenz für den aktuellen Tretzyklus ($CP_j$) ausgehend von den Beschleunigungsmessungen, und
- einen Schritt (E9) der Berechnung der während des aktuellen Tretzyklus ($CP_j$) entwickelten mittleren Nutzleistung ($\overline{P}_u[CP_j]$) ausgehend von der geschätzten mittleren Nutzbeanspruchung für den aktuellen Tretzyklus ($CP_j$) und von der für den aktuellen Tretzyklus ($CP_j$) gültigen geschätzten Tretkadenz,

wobei das Schätzverfahren einer Nutzleistung von einer Kontrolleinheit (5) angewendet wird, die einen Nutzbeanspruchungsschätzer (53) und einen Nutzleistungsrechner (54) umfasst, wobei die Kontrolleinheit eingerichtet ist, durch drahtlose Verbindung mit dem Kraftsensor und mit dem Beschleunigungssensor zu kommunizieren, die in ein Pedal des Tretlagers eingebaut sind.

2. Verfahren nach dem vorhergehenden Anspruch, **dadurch gekennzeichnet, dass**:

- die geschätzte Nutzbeanspruchung die Tangentialkomponente (*Fm_n*) einer durch Auflage auf das Pedal (1) auf die Tretkurbel (2) übertragenen Kraft ist; und/oder
- die gemessene Auflagekraft ($Fp_n$) die Komponente einer von der Person auf das Pedal (1) ausgeübten Gesamtauflagekraft ($F_{tot}$) ist, die orthogonal zu einer Auflageebene auf dem Pedal (1) ist; und/oder
- bei einem vorhergehenden Kalibrierungsschritt (E0) die Korrelationsfunktion ausgehend von einer Einheit von Messungen der Auflagekraft und von Messungen der entsprechenden Nutzbeanspruchung bestimmt wird.

3. Verfahren nach einem der vorhergehenden Ansprüche, **dadurch gekennzeichnet, dass** im Schritt (E9) der Berechnung der Nutzleistung $\overline{P}_u[CP_j]$) das Produkt aus der während des aktuellen Tretzyklus ($CP_j$) geschätzten mittleren Nutzbeanspruchung ($\overline{F}_u[CP_j]$), einer aktuellen Winkelgeschwindigkeit ($\theta j$) und der Länge ($L_m$) einer Tretkurbel (2) des Tretlagers (4) berechnet wird, wobei die Winkelgeschwindigkeit ($\theta$j) von der gültigen geschätzten Tretkadenz ($\delta$**j**) für den aktuellen Tretzyklus ($CP_j$) abhängt.

4. Verfahren nach einem der vorhergehenden Ansprüche, **dadurch gekennzeichnet, dass**:

- das Verfahren einen Testschritt (E6) enthält, der darin besteht, zu überprüfen, ob die geschätzte Tretkadenz ($\delta$**j**) zwischen 0,5 Hz und 2 Hz liegt, und dass die Berechnung der mittleren Nutzleistung ($\overline{P}_u[CP_j]$) während des Tretzyklus ($CP_j$) im Fall eines negativen Tests verhindert wird; und/oder
- das Verfahren einen Testschritt (E7) enthält, der darauf abzielt, Änderungen der Beschleunigung von einen Wert gleich oder nahe + 1 g zu einem Wert gleich oder nahe - 1 g und von einem Wert gleich oder nahe - 1 g zu einem Wert gleich oder nahe + 1 g zu erfassen, und dass die Berechnung (E9) der mittleren Nutzleistung für den aktuellen Tretzyklus ($CP_j$) im Fall eines positiven Tests verhindert wird; und/oder

- das Verfahren einen Testschritt (E8) enthält, der darauf abzielt, zu erfassen, ob die gemessene Beschleunigung in einem vordefinierten Ausmaß enthalten ist, und im Fall eines negativen Tests die Berechnung der mittleren Nutzleistung für den aktuellen Tretzyklus ($CP_j$) verhindert wird.

5. Verwendung des Schätzverfahrens einer Nutzleistung, die von einer Person während einer körperlichen Aktivität entwickelt wird, die darin besteht, eine abwechselnde Tretbewegung auf einer Tretlagervorrichtung auszuüben, nach einem der vorhergehenden Ansprüche, um eine Menge von Kalorien zu schätzen, die von der Person während der körperlichen Aktivität verbrannt werden, die einen Schritt (E10) der zeitlichen Integration der geschätzten Leistung, um eine Schätzung der verbrannten Energie zu berechnen, und einen Schritt (E11) der Umwandlung der geschätzten verbrannten Energie in Kalorien enthält.

6. System zum Schätzen einer Nutzleistung, die von einer Person während einer körperlichen Aktivität entwickelt wird, die darin besteht, eine abwechselnde Tretbewegung auf einer Tretlagervorrichtung auszuführen, das System enthält:

- eine Schätzvorrichtung einer Nutzbeanspruchung, die von einer Person während einer körperlichen Aktivität geliefert wird, die darin besteht, eine abwechselnde Tretbewegung auf einer Tretlagervorrichtung auszuführen, die einen Sensor ($C_F$) zur Messung einer Auflagekraft ($Fp_n$), die sich von der Nutzbeanspruchung unterscheidet, auf ein Pedal (1) des Tretlagers (4) aufweist, die von der Person während eines Tretzyklus ($CP_j$) ausgeübt wird, **dadurch gekennzeichnet, dass** sie ein Modul (50) zur Bestimmung eines Maximums der gemessenen Auflagekraft ($max(Fp_n)$) während eines aktuellen Tretzyklus ($CP_j$), einen Nutzbeanspruchungsschätzer (53), der dazu bestimmt ist, eine mittlere Nutzbeanspruchung ($\overline{F}_u[CP_j]$), die von der Person während des aktuellen Tretzyklus ($CP_j$) ausgeübt wird, ausgehend vom bestimmten Maximum der Auflagekraft ($max(Fp_n)$) und mit Hilfe einer vorab erstellten Korrelationsfunktion ($f_{aff}$) zwischen einem Maximum der während eines Tretzyklus ausgeübten Auflagekraft und einer mittleren Nutzbeanspruchung im Tretzyklus zu schätzen, **dadurch gekennzeichnet, dass** die vorab erstellte Funktion eine durch die Funktion $y = \alpha \cdot x + \beta$ definierte affine lineare Regressionsfunktion ist, wobei y die von der Person während des Tretzyklus ausgeübte mittlere Nutzbeanspruchung bezeichnet, wobei x das Auflagekraftmaximum während des Tretzyklus bezeichnet, und wobei $\alpha$ und $\beta$ während einer Kalibrierungsphase vordefinierte Parameter sind, und einen Speicher (51) zum Speichern der Korrelationsfunktion ($f_{aff}$) enthält,

das System enthält:

- einen Sensor ($C_A$) zur Messung einer Beschleunigung des Tretlagers (4) während einer Folge von Tretzyklen,
- ein Modul (52) zur Bestimmung einer gültigen Tretkadenz ($\delta_j$) für einen aktuellen Tretzyklus ($CP_j$) ausgehend von den Beschleunigungsmessungen, und
- einen Nutzleistungsrechner (54), der dazu bestimmt ist, die während eines Tretzyklus entwickelte mittlere Nutzleistung zu berechnen, ausgehend von der für den Tretzyklus ($CP_j$) geschätzten mittleren Nutzbeanspruchung und von der für den Tretzyklus ($CP_j$) bestimmten gültigen Tretkadenz, und das System eine Kontrolleinheit (5) enthält, die den Nutzbeanspruchungsschätzer (53) und den Nutzleistungsrechner (54) umfasst, eingerichtet, um durch drahtlose Verbindung mit dem Kraftsensor (CF) und mit dem Beschleunigungssensor (CA) zu kommunizieren, die in ein Pedal (1) des Tretlagers (4) eingebaut sind.

7. System nach dem vorhergehenden Anspruch, **dadurch gekennzeichnet, dass** die Auflagekraft mit Hilfe eines Drucksensors (CF) gemessen wird, der in mindestens eines der Pedale (1) des Tretlagers (4) eingebaut ist.

8. System nach einem der Ansprüche 6 oder 7, **dadurch gekennzeichnet, dass** der Messsensor einer Beschleunigung ($C_A$) in oder auf einem Pedal (1) des Tretlagers (4) angeordnet ist.

9. System nach einem der Ansprüche 6 bis 8, **dadurch gekennzeichnet, dass** der Nutzleistungsrechner (54) eingerichtet ist, das Produkt aus der geschätzten mittleren Nutzbeanspruchung für einen Tretzyklus ($CP_j$), einer gültigen Winkelgeschwindigkeit ($\theta_j$) des Tretlagers (4) für den Tretzyklus ($CP_j$) und der Länge ($L_m$) einer Tretkurbel (2) des Tretlagers (4) zu berechnen, wobei die Winkelgeschwindigkeit ($\theta_j$) von der bestimmten Tretkadenz ($\delta_j$) abhängt.

10. System nach einem der Ansprüche 6 bis 9, **dadurch gekennzeichnet, dass**:

- das System ein erstes Testmodul (55) enthält, das darin besteht, zu überprüfen, ob die geschätzte Tretkadenz zwischen 0,5 Hz und 2 Hz liegt, wobei der Leistungsrechner eingerichtet ist, die Berechnung der Nutzleistung im Fall eines negativen Tests zu verhindern; und/oder
- das System ein zweites Testmodul (56) enthält, das darauf abzielt, Änderungen der Beschleunigung zwischen einem Wert gleich oder nahe + 1 g und einem Wert gleich oder nahe - 1 g zu erfassen, wobei der Leistungsrechner (54) eingerichtet ist, die Berechnung der Nutzleistung im Fall eines positiven Tests zu verhindern; und/oder
- das System ein drittes Testmodul (57) enthält, das darauf abzielt, zu erfassen, ob die gemessene Beschleunigung in einem vordefinierten Ausmaß enthalten ist, wobei der Leistungsrechner (54) eingerichtet ist, die Berechnung der Nutzleistung im Fall eines negativen Tests zu verhindern.

11. E-Bike, das einen Elektromotor, eine Versorgungsbatterie und eine Steuervorrichtung des Motors enthält, **dadurch gekennzeichnet, dass** es ein System (100) zum Schätzen einer Nutzleistung enthält, die von einer Person während des Tretens auf dem Fahrrad entwickelt wird, nach einem der Ansprüche 6 bis 10, wobei die Steuervorrichtung eingerichtet ist, den Elektromotor abhängig von der geschätzten Nutzleistung zu steuern.

12. Antriebsset für ein Fahrrad, das einen Elektro- oder Wärmekraftmotor, eine Versorgungsbatterie und eine Steuervorrichtung des Motors enthält, **dadurch gekennzeichnet, dass** es ein System zum Schätzen einer Nutzleistung enthält, die von einer Person während des Tretens auf dem Fahrrad entwickelt wird, nach einem der Ansprüche 6 bis 10, wobei die Steuervorrichtung eingerichtet ist, den Motor abhängig von der geschätzten Nutzleistung zu steuern.

**Claims**

1. Method of estimation of a useful power provided by an individual during a physical activity consisting in executing an alternating pedalling movement on a pedal device (4), the method comprises an estimation (E1 - E3) of a mean useful effort ($\overline{F}_u[CP_j]$) exerted by the individual during a current pedalling cycle ($CP_j$), by implementing a method involving :

- a step (E1) of measurement of a bearing force ($Fp_n$) on a pedal (1) of the pedal set (4) by a force measurement sensor (Cf) outfitting the pedal (1), different from the useful effort, exerted by the individual during a pedalling cycle ($CP_j$),
- a step (E2) of determination of a maximum ($max(Fp_n)$) of the bearing force measured during the pedalling cycle (CPj), and
- a step (E3) of estimation of a mean useful effort exerted by the individual during said pedalling cycle ($CP_j$) from the maximum of the bearing force ($max(Fp_n)$) determined and with the aid of a predetermined correlation function ($f_{aff}$, D) between a maximum bearing force during a pedalling cycle and a mean useful effort in said cycle, **characterized in that** said correlation function ($f_{aff}$, D) being stored in a memory (51) of a device (6), said predetermined function ($f_{aff}$, D) is an affine linear regression function defined by the function y=$\alpha$x+$\beta$ where y designates mean useful effort provided by the cyclist during said pedalling cycle, where x designates the maximum of bearing force during the pedalling cycle, and where $\alpha$ and $\beta$ are parameters which are predefined during a calibration phase,

the method of estimation of a useful power comprising :

- a step (E4) of measuring an acceleration of the pedal set (4) during a succession of pedalling cycles by an acceleration sensor (CA),
- a step (E5) of determination of a pedalling rhythm valid for the current pedalling cycle ($CP_j$) from the measurements of acceleration, and
- a step (E9) of calculating the mean useful power ($\overline{P}_u[CP_j]$) developed during the current pedalling cycle (CPj) from the mean useful effort estimated for said current pedalling cycle (CPj) and the estimated pedalling rhythm valid for said current pedalling cycle (CPj),

the method of estimation of a useful power being implemented by a control unit (5), integrating an estimator of useful effort (53) and a calculator of useful power (54), the control unit being adapted to communicate by wireless link with the force sensor and with the acceleration sensor outfitting one pedal of the pedal set.

2. Method according to the preceding claim, **characterized in that**:

- the useful effort estimated is the tangential component ($Fm_n$) of a force transmitted to the crank (2) by bearing on the pedal (1) ; and/or
- the bearing force measured ($Fp_n$) is the component of a total bearing force (Ftot) exerted by the individual on the pedal (1) which is orthogonal to a plane of bearing on the pedal (1) ; and/or
- during a preliminary calibration step (E0), one determines the correlation function from a set of measurements of said bearing force and measurements of the corresponding useful effort.

3. Method according one of the preceding claims, **characterized in that**, during the step (E9) of calculating the useful power ($\overline{P}_u[CP_j]$), one calculates the product of the mean useful effort ($\overline{F}_u[CP_j]$) estimated during the current pedalling cycle (CPj), a current angular velocity ($\theta j$) and the length ($L_m$) of a crank (2) of the pedal set (4), said angular velocity ($\theta j$) being a function of the estimated pedalling rhythm ($\delta j$) valid for the current pedalling cycle (CPj).

4. Method according to one of the preceding claims , **characterized in that**:

   - the method involves a test step (E6) consisting in checking to see if the estimated pedalling rhythm ($\delta j$) is between 0.5 Hz and 2 Hz and **in that** the calculating of the mean useful power $P_u[CP_j]$) during the pedalling cycle ($CP_j$) is inhibited in the event of a negative test; and/or
   - the method involves a test step (E7) designed to detect variations in the acceleration from a value equal to or close to +1 g to a value equal to or close to -1 g and from a value equal to or close to -1 g to a value equal to or close to +1 g, and **in that** the calculating (E9) of the mean useful power for the current pedalling cycle ($CP_j$) is inhibited in the event of a positive test; and/or
   - the method involves a test step (E8) designed to detect whether the measured acceleration is contained in a predefined template and in the event of a negative text the calculating of the mean useful power for the current pedalling cycle ($CP_j$) is inhibited.

5. Use of the method of estimation of a useful power developed by an individual during a physical activity consisting in executing an alternating pedalling movement on a pedal device, according to one of the preceding claims, in order to estimate an amount of calories spent by the individual during the physical activity, involving a step (E10) of integrating over time the estimated power in order to calculate an estimation of the energy spent and a step (E11) of conversion of the estimated energy spent into calories.

6. System for estimation of a useful power developed by an individual during a physical activity consisting in executing an alternating pedalling movement on a pedal device, the system comprises

   • a device for estimation of a useful effort provided by an individual during a physical activity consisting in executing an alternating pedalling movement on a pedal device, comprising a sensor ($C_F$) to measure a bearing force ($Fp_n$) on a pedal (1) of the pedal set (4), different from the useful effort, exerted by the individual during a pedalling cycle ($CP_j$), **characterized in that** it comprises a module (50) for determination of a maximum of the bearing force ($max(Fp_n)$) measured during a current pedalling cycle (CPj), an estimator of useful effort (53) designed to estimate a mean useful effort ($\overline{F}_u[CP_j]$) exerted by the individual during said current pedalling cycle ($CP_j$) from the maximum of the bearing force ($max(F_{Pn})$) determined and with the aid of a predetermined correlation function ($f_{aff}$) between a maximum of the bearing force exerted during a pedalling cycle and a mean useful effort in said pedalling cycle, **characterized in that**

   said predetermined function ($f_{aff}$, D) is an affine linear regression function defined by the function y=$\alpha$x+$\beta$ where y designates mean useful effort provided by the cyclist during said pedalling cycle, where x designates the maximum of bearing force during the pedalling cycle, and where $\alpha$ and $\beta$ are parameters which are predefined during a calibration phase,
   the system comprises

   • a sensor ($C_A$) to measure an acceleration of the pedal set (4) during a succession of pedalling cycles,
   • a module (52) for determination of a pedalling rhythm ($\delta j$) valid for a current pedalling cycle (CPj), from the measurements of acceleration, and
   • a calculator of useful power (54) designed to calculate the mean useful power developed during a pedalling cycle, from the mean useful effort estimated for said pedalling cycle ($CP_j$) and from the valid pedalling rhythm determined for said pedalling cycle (CPj),

and the system comprises a control unit (5), integrating the estimator of useful effort (53) and the calculator of useful power (54), adapted to communicate by wireless link with the force sensor ($C_F$) and with the acceleration sensor ($C_A$) outfitting one pedal (1) of the pedal set (4).

7. System according to the preceding claim, **characterized in that** the bearing force is measured with the aid of a pressure sensor ($C_F$) outfitting at least one of the pedals (1) of the pedal set (4).

8. System according one of the claims 6 or 7, **characterized in that** the sensor to measure an acceleration ($C_A$) is disposed in or on one pedal (1) of the pedal set (4).

9. System according to one of the claims 6 to 8, **characterized in that** the calculator of useful power (54) is adapted to calculate the product of the mean useful effort estimated for a pedalling cycle (CPj), an angular velocity ($\theta j$) of the pedal set (4) valid for said pedalling cycle (CPj) and the length ($L_m$) of a crank (3) of the pedal set (4), said angular velocity ($\theta j$) being a function of the pedalling rhythm ($\delta j$) determined.

10. System according to one of the claims 6 to 9, **characterized in that**:

- the system comprises a first test module (55) consisting in checking to see if the estimated pedalling rhythm is between 0.5 Hz and 2 Hz, the power calculator being adapted to inhibit the calculating of the useful power in the event of a negative test; and/or
- the system comprises a second test module (56) designed to detect variations in the acceleration between a value equal to or close to +1 g and a value equal to or close to -1 g, the power calculator (54) being adapted to inhibit the calculating of the useful power in the event of a positive test ; and/or
- the system comprises a third test module (57) designed to detect whether the measured acceleration is contained in a predefined template, the power calculator (54) being adapted to inhibit the calculating of the useful power in event of a negative test.

11. Electrically assisted bicycle, comprising an electric motor, a power supply battery, and a motor control device, **characterized in that** it comprises a system (100) for estimation of a useful power developed by an individual during the pedalling on said bicycle, according to one of claims 6 to 10, the control device being adapted to control the electric motor as a function of the estimated useful power.

12. Motorization kit for a bicycle, comprising an electric or thermal motor, a power supply battery, and a motor control device, **characterized in that** it comprises a system for estimation of a useful power developed by an individual during the pedalling on said bicycle, according to one of claims 6 to 10, the control device being adapted to control the motor as a function of the estimated useful power.

FIG.1

FIG.2

$z_p$

$y_p$

$x_p$

FIG.3

100

5

4

$C_A$

$C_F$

1

A

$Fm_n$

f

$Fm_r$

2

$F_{tot}$

3

A'

FIG.4

FIG.5

FIG.6

FIG.7

CONFIG
→ α, β  — E0

MES Fp$_n$ — E1

DET $max(Fp_n)$ — E2

EST $\overline{Fm}_n[CP_j]$ — E3

MES Acc_z$_p$ — E4

DET $\delta j \leftrightarrow \theta_j$ — E5

TEST 1 — E6

TEST 2 — E7

TEST 3 — E8

OK/NOK

$$\overline{P_u}[CP_j] = \overline{Fm}_n[CP_j] \times L_m \times \theta j = \overline{Fm}_n[CP_j] \times L_m \times 360 \times \delta j$$ — E9

$$E_{nm} = \int_{j=n}^{j=m} \overline{P_u}[CP_j]$$ — E10

$$NC_{nm} = \frac{1}{4,18 \times 10^3} \times E_{nm}$$ — E11

FIG.8

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2012038677 A
- JP H11147494 A

- WO 20120386677 A